**Europäisches Patentamt**

**European Patent Office**

**Office européen des brevets**

(19)

(11) Veröffentlichungsnummer : **0 479 792 B1**

# EUROPÄISCHE PATENTSCHRIFT

(12)

(45) Veröffentlichungstag der Patentschrift :
**16.02.94 Patentblatt 94/07**

(51) Int. Cl.⁵ : **B60R 21/00, G06F 11/00**

(21) Anmeldenummer : **90906861.1**

(22) Anmeldetag : **16.05.90**

(86) Internationale Anmeldenummer :
**PCT/DE90/00364**

(87) Internationale Veröffentlichungsnummer :
**WO 91/00200 10.01.91 Gazette 91/02**

(54) INSASSEN-SICHERHEITSSYSTEM.

(30) Priorität : **29.06.89 DE 3921250**

(43) Veröffentlichungstag der Anmeldung :
**15.04.92 Patentblatt 92/16**

(45) Bekanntmachung des Hinweises auf die
Patenterteilung :
**16.02.94 Patentblatt 94/07**

(84) Benannte Vertragsstaaten :
**DE FR GB SE**

(56) Entgegenhaltungen :
**EP-A- 0 115 222
EP-A- 0 283 737
EP-A- 0 305 656
FR-A- 2 606 897**

(73) Patentinhaber : **ROBERT BOSCH GMBH
Postfach 30 02 20
D-70442 Stuttgart (DE)**

(72) Erfinder : **WELLER, Hugo
Moerikestra e 5
D-7141 Oberriexingen (DE)**
Erfinder : **TAUFER, Peter
Talstra e 43
D-7253 Renningen 2 (DE)**
Erfinder : **BALZER, Knut
Eglosheimer Stra e 33
D-7140 Ludwigsburg-Pflugfelden (DE)**
Erfinder : **BURGER, Wilfried
Bahnhofstra e 97
D-7254 Hemmingen (DE)**

EP 0 479 792 B1

**Beschreibung**

Stand der Technick

Die Erfindung betrifft ein Insassen-Sicherheitssystem für ein Fahrzeug, insbesondere ein Rückhaltesystem, wie Airbag, Gurtstraffer oder dergleichen, mit einer mindestens zwei Sensoren aufweisenden Sensoreinrichtung, einer mindestens zwei Aufbereitungsschaltungen umfassenden Aufbereitungseinrichtung für die Sensorsignale, einem Rechnersystem und einer aus mindestens zwei Stufen bestehenden Auslöseschaltung für eine Sicherheitseinrichtung.

In Sicherheitssystemen der eingangs genannten Art, wie z.B. auf elektronischer Basis arbeitenden Rückhaltesystemen, sind für eine hohe Zuverlässigkeit die kritischen Komponenten, wie z.B. Sensoren, Signalaufbereitungsschaltungen und Rechner, insbesonder Mikrocomputer für die Signalverarbeitung, redundant, insbesondere doppelt vorhanden. Durch die geschaffene Redundanz weisen die bekannte Rückhaltesysteme insofern eine mehrfache Sicherheit auf. Diese geht jedoch zu Lasten der Gestehungskosten, da ein entsprechend hoher Aufwand betrieben werden muß.

Sofern man bei bekannten Sicherheitssystem auf eine Redundanz verzichtet und die Systemkomponenten lediglich in einfach vorhandener Ausführung einsetzt, erniedrigen sich zwar die Kosten, es muß dann jedoch auch von einem niedrigeren Sicherheitsniveau ausgegangen werden. Dieses kann einerseits darin bestehen, daß Fehlauslösungen des Insassen-Sicherheitssystems nicht auszuschließen sind oder - obwohl erforderlichkeine Auslösung des Sicherheitssystems erfolgt.

Aus EP-A-0 283 737 ist eine Schaltungsanordnung zum Betätigen eines Schutzsystems für Fahrzeuginsassen bekannt, bei dem ein in einem Airbaggehäuse angeordneter Auslöser für Sicherheitssysteme vorgesehen ist. Unterander in Serie und in Serie mit dem Auslöser 10 sind mehrere Auslöseschalter geschaltet, die von Stromquellen angesteuert werden, die ihrerseits wieder von Ausgangssignalen von Logikteilen beaufschlagt werden. Parallel geschalteten Eingangsanschlüssen der Logikteile werden die Ausgangssignale verzögerungsabhängig schaltender Doppelschalter zugeführt. Die Aufgabe der Logikteile kann von entsprechend programmierten Mikrocomputern mit entsprechender Peripherie übernommen werden. In dem Dokument wird weiter darauf hingewiesen, daß für Testzwecke jeweils ein Teil der Auslöseschalter in bestimmten Zeitabständen periodisch ansteuerbar ist, wobei diese Ansteuerung auch von einem Mikroprozessor durchgeführt werden kann.

Vorteile der Erfindung

Das erfindungsgemäße Insassen-Sicherheitssystem mit den im Hauptanspruch genannten Merkmalen hat demgegenüber den Vorteil, daß etwa die gleich hohe Sicherheit wie bei einem Redundanz-System geboten wird und dennoch erhebliche Kosten eingespart werden können. Die Kosteneinsparung resultiert daraus, daß es sich bei dem eingesetzten Rechnersystem um ein Einrechnersystem, also nicht um ein Zwei- oder Mehrrechnersystem handelt, wobei für eine hohe Zuverlässigkeit die von den beiden Aufbereitungsschaltungen gelieferten Daten von dem gleichen Rechner (Mikrocomputer) in zwei zeitlich zueinander versetzten Programmen bearbeitet werden. Dieses führt zu einer Quasi-Redundanz. Sofern die Informationen der beiden, von den Sensoren bzw. Aufbereitungsschaltungen kommenden Daten-Signalpfade erheblich voneinander abweichen, erfolgt keine Auslösung des Sicherheitssystems. Dabei wird die Informationsverarbeitung lediglich von einem Rechner vorgenommen, der mit einer zweistufigen Auslöseschaltung für die Sicherheitseinrichtung in Verbindung steht. Unzulässige Abweichungen zwischen den Informationen der beiden Daten-Signalpfade bzw. auftretende Fehler führen dazu, daß z.B. nur eine Stufe der Auslöseschaltung aktiviert wird, so daß eine Auslösung des Sicherheitssystems nicht erfolgen kann, da hierzu die Aktivierung beider Stufen erforderlich ist. Durch das erfindungsgemäße Einrechnersystem werden nicht nur die Kosten gesenkt. Es bleibt bei einem gegenüber einem Zweirechnersystem etwa gleich hohem Sicherheitsniveau, weil beispielsweise eine Störung in einem der Abläufe der beiden zueinander zeitlich versetzten Programme dazu führt, daß auch das andere Programm nicht weiter abgearbeitet werden kann, so daß eine Auslösung des Sicherheitssystems unterbleibt.

Insbesondere ist vorgesehen, daß der jeweilige Start der beiden Programme durch zwei voneinander unabhängige Interruptquellen erfolgt. Vorzugsweise werden sogenannte Timerinterrupts eingesetzt.

Die Startzeit des ersten Programms beträgt vorzugsweise $n \cdot T$ und die Startzeit des zweiten Programms $(2n + 1) \cdot (T/2)$, wobei n die aufeinanderfolgenden ganzen positiven Zahlen des Zahlenstrahls sind und T eine Bearbeitungsperiode darstellt. Hierdurch ist gewährleistet, daß innerhalb einer Bearbeitungsperiode stets sowohl das erste als auch das zweite Programm in zueinander versetzten Zeitpunkten gestartet wird.

Ferner kann eine Watchdog-Schaltung vorgesehen sein, die durch die beiden Programme getriggert wird und an einen Reset-Eingang des Rechnersystems angeschlossen ist. Die Watchdog-Schaltung muß alternierend zu bestimmten Zeitpunkten von beiden Programmen angesteuert werden, damit sie dem Reset-Eingang des Rechnersystems keinen Impuls zuführt, d.h. das Rechnersystem nicht rücksetzt. Sofern jedoch Unregelmäßigkeiten oder Fehler bei der Signalverarbeitung auftreten, was zu einer Fehltriggerung oder Ausfallen der Triggerung führt, wird durch das Rücksetzen des Rechnersystems eine mögliche Fehlauslösung des Insassen-Sicherheitssystems vermieden.

Insbesondere kann als Watchdog-Schaltung eine Fenster-Watchdog-Schaltung eingesetzt werden, d.h. die jeweiligen Triggersignale müssen für eine einwandfreie Funktion innerhalb bestimmter Zeitfenster liegen.

Zur Erzielung einer besonders hohen Sicherheit wird das Triggersignal je zur Hälfte von dem ersten und dem zweiten Programm erzeugt. Insbesondere kann vorgesehen sein, daß der Start des einen, insbesondere zweiten Programms eine ansteigende Flanke und daß der Start des anderen, insbesondere ersten Programms eine abfallende Flanke des Triggersignals erzeugt. Mithin lösen die genannten Interruptquellen jeweils zu den oben genannten Startzeiten die Abläufe der beiden Programme aus, die die ansteigende bzw. abfallende Flanke des Triggersignals generieren, so daß ein aus entsprechenden Rechteckimpulsen bestehendes Triggersignal erzeugt wird. Dieses steuert für die genannte Überwachungsfunktion die Watchdog-Schaltung an.

Für einen korrekten Funktionsablauf ist es erforderlich, daß das erste Programm beendet ist, bevor das zweite Programm startet. Aus Sicherheitsgründen kann vorgesehen sein, daß das eine Programm die Beendigung des anderen Programms prüft. Insbesondere kann jedes Programm eine Schlußkennung aufweisen, die von dem entsprechend anderen Programm überwacht wird. Ferner betrifft die Erfindung ein Verfahren für das Betreiben eines Insassen-Sicherheitssystems für ein Fahrzeug, insbesondere Rückhaltesystem, wie Airbag, Gurtstraffer oder dergleichen, mit einer mindestens zwei Sensoren aufweisenden Sensoreinrichtung, einer mindestens zwei Aufbereitungsschaltungen umfassenden Aufbereitungseinrichtung für die Sensorsignale, einem Rechnersystem und einer aus mindestens zwei Stufen bestehenden Auslöseschaltung für eine Sicherheitseinrichtung, wobei das als Einrechnersystem ausgebildete Rechnersystem die Daten der beiden Aufbereitungsschaltungen in zwei zeitlich zueinander versetzten Programmen bearbeitet.

Eine Auslösung der Auslöseschaltung erfolgt nur dann, wenn ihre beiden Stufen aufgrund eines gleichen oder annähernd gleichen Ergebnis' beider Programmabläufe aktiviert werden.

Zeichnung

Die Erfindung wird im folgenden anhand der Figuren näher erläutert. Es zeigen:

Figur 1 ein Blockschaltbild der Auslöseeinrichtung eines Insassen-Sicherheitssystems und

Figur 2 ein Arbeitsdiagramm des Sicherheitssystems.

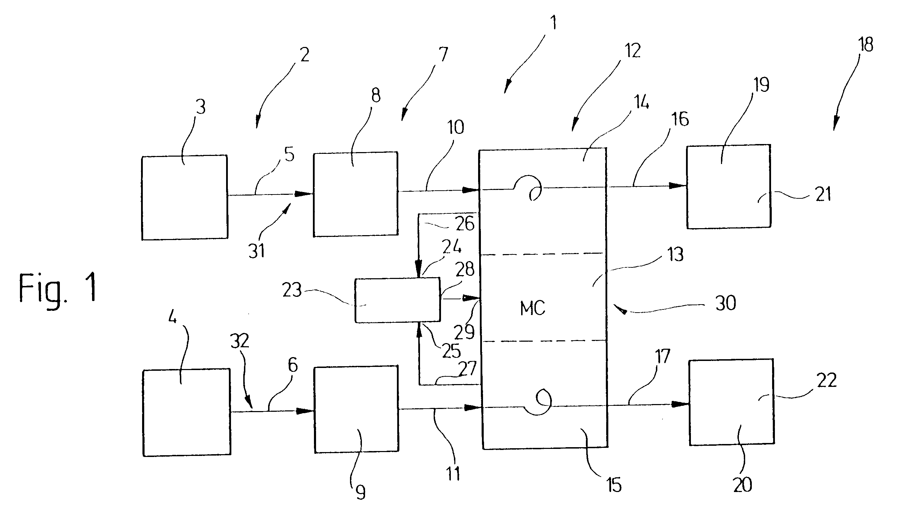

In der Figur 1 ist lediglich eine Komponente eines Insassen-Sicherheitssystems für ein Fahrzeug dargestellt, und zwar handelt es sich um eine Ansteuerschaltung 1. Bei dem nicht näher dargestellten Insassen-Sicherheitssystem kann es sich um ein Rückhaltesystem, wie Airbag, Gurtstraffer oder dergleichen handeln. Derartige Sicherheitssysteme werden elektrisch ausgelöst, d.h. sie besitzen eine elektrisch zündbare Zündpille, die - im Falle eines Airbags - einen Treibsatz zündet, der den Gasdruck zum Auffüllen des Prallkissens erzeugt.

Gemäß Figur 1 weist die Ansteuerschaltung 1 eine Sensoreinrichtung 2 auf, die aus zwei Sensoren 3 und 4 besteht. Die Sensoren 3 und 4 stehen über Leitungen 5 und 6 mit einer Aufbereitungseinrichtung 7 in Verbindung, die eine Aufbereitungsschaltung 8 sowie eine Aufbereitungsschaltung 9 aufweist. Die Aufbereitungsschaltung 8 arbeitet mit dem Sensor 3 und die Aufbereitungsschaltung 9 mit dem Sensor 4 zusammen. Über Leitungen 10 und 11 stehen die Aufbereitungsschaltungen 8 und 9 mit einem Rechnersystem 12 in Verbindung. Das Rechnersystem 12 ist als Mikrocomputer 13 ausgebildet, in dem die Signalverarbeitungsprozesse 14 (P1) und 15 (P2) zeitlich versetzt ablaufen. Der Signalverarbeitungsprozess 14 steht über die Leitung 16 und der Signalverarbeitungsprozess 15 über die Leitung 17 mit der Auslöseschaltung 18 in Verbindung, die zwei Stufen 19 und 20 umfaßt.

Ferner ist eine Fenster-Watchdog-Schaltung 23 vorgesehen, mit deren Eingängen 24 und 25 die Signalverarbeitungsprozesse 14 und 15 über die Leitungen 26 und 27 verbunden sind. Ein Ausgang 28 der Fenster-Watchdog-Schaltung 23 ist an einen Reset-Eingang 29 des Mikrocomputers 13 angeschlossen.

Die Schaltung der Figur 1 arbeitet folgendermaßen:

Die Sensoren 3 und 4 überwachen den Fahrzustand des (nicht dargestellten) Fahrzeugs, z.B. im Hinblick auf dessen Beschleunigung. Die von den Sensoren erfaßten Beschleunigungen gelangen über die Leitungen 5 und 6 auf die Aufbereitungsschaltungen 8 und 9. Die aufbereiteten Daten werden anschließend über die Leitungen 10 und 11 dem Mikroprozessor 13 zugeführt. Dieser bildet erfindungsgemäß ein Einrechnersystem 30, d.h., anders als die Komponenten 3,4;8,9;19,20 ist dieser nur einmal vorhanden. Er verarbeitet die über die Daten-Signalpfade 31 bzw. 32 erhaltenen Informationen in den beiden Signalverarbeitungsprozessen 14 (P1) und 15 (P2).

Erfindungsgemäß werden die von den beiden Aufbereitungsschaltungen 8 und 9 stammenden Daten mittels zweier zeitlich zueinander versetzter Programme (erstes Programm P1, zweites Programm P2) bearbeitet.

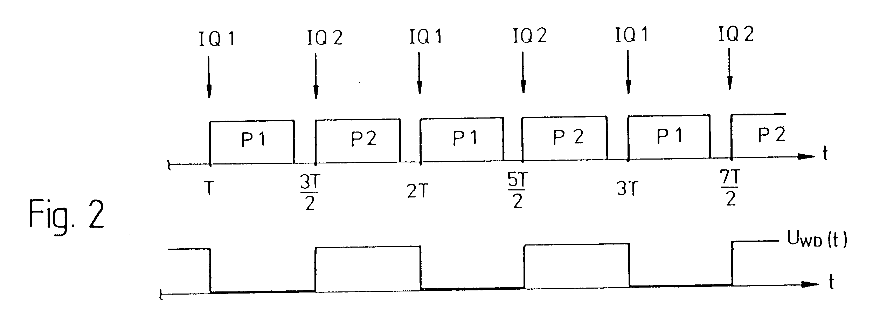

Dieses geht näher aus der Figur 2 hervor. Aus dem oberen Teil der Figur 2 ist ersichtlich, daß die beiden Programme P1 und P2 zeitlich versetzt zueinander ablaufen. Es besteht demgemäß die Programmfolge: P1, P2, P1, P2, P1 usw. Die Startzeiten der Programme P1 und P2 werden von zwei voneinander unabhängigen Interruptsquellen IQ1 und IQ2 erzeugt. Bei Eintreten des Timerinterrupts IQ1 startet das Programm P1 und bei Eintreten des Timerinterrupts IQ2 startet das Programm P2.

Die Startpunkte der Programme P1 und P2 sind durch folgende Beziehungen festgelegt:

Die Startzeit T1 des ersten Programms P1 beträgt

$$T1 = n \cdot T$$

und die Startzeit T2 des zweiten Programms P2 beträgt

$$T2 = (2n + 1) \cdot (T/2),$$

wobei n die aufeinanderfolgenden ganzen positiven Zahlen des Zahlenstrahls sind und T eine Bearbeitungsperiode darstellt.

Innerhalb einer Bearbeitungsperiode T erfolgt sowohl der Durchlauf des Programms P1 als auch der Durchlauf des Programms P2. Die jeweiligen Startzeiten der beiden Programme betragen gemäß obiger Beziehungen:

$$\text{für } n = 1 : T1 = T, T2 = 3T/2$$
$$\text{für } n = 2 : T1 = 2T, T2 = 5T/2$$
$$\text{für } n = 3 : T1 = 3T, T2 = 7T/2$$

usw.

Mithin starten die beiden Programme P1 und P2 alternierd im zeitlichen Abstand T/2. Dieses wird von der Fenster-Watchdog-Schaltung 23 geprüft. Bei Abweichungen gibt die Fenster-Watchdog-Schaltung 23 an ihrem Ausgang 28 einen Resetimpuls ab, der an den Reset-Eingang 29 des Mikrocomputers 13 gelegt wird. Dieses führt zu einem Rücksetzen des Rechnersystems 12, so daß Fehlauslösungen des Insassen-Sicherheitssystems vermieden werden.

Insbesondere ist die Anordnung derart ausgebildet, daß mit dem Start des Signalverarbeitungsprozesses 14 (P1) eine abfallende Flanke und mit dem Start des Signalverarbeitungsprozesses 15 (P2) eine ansteigende Flanke abgegeben wird, wobei die Flanken über die Leitungen 26 und 27 an die Eingänge 24 und 25 als Triggersignale zur Fenster-Watchdog-Schaltung 23 gelangen. Starten die Programme P1 und P2 alternierend im zeitlichen Abstand T/2, so tritt am Ausgang 28 der Fenster-Watchdog-Schaltung 23 kein Reset-Impuls auf. Sofern Unregelmäßigkeiten in der Triggerung vorliegen oder ein Ausfall erfolgt, wird - wie zuvor beschrieben - ein Rücksetzen des Mikrocomputers 13 vorgenommen.

Das auf die geschilderte Weise erzeugte Triggersignal $U_{WD}$ (t) ist in der unteren Darstellung der Figur 2 abgebildet.

Sofern in einem Auslösefall eine fehlerfreie Signalverarbeitung vorliegt, werden über die Leitungen 16 und 17 die beiden Zündendstufenteile 21 und 22 angesteuert. Diese weisen steuerbare Schaltglieder auf, die mit einer Zündpille des als Airbag ausgebildeten Insassen-Sicherheitssystems in Reihe liegen, so daß ein Durchschalten dieser Schaltglieder zum Zünden der Zündpille und damit zur Auslösung führt.

Liegt eine Fehlfunktion vor oder ist z.B. ein Programmablauf gestört, so verhindert der Reset-Impuls der Fenster-Watchdog-Schaltung 23 eine Auslösung des Insassen-Sicherheitssystems Sofern in einem der Daten-Signalpfade 31 bzw. 32 ein Fehler auftritt, wird nur ein Zündendstufenteil 21 oder 22 aktiviert, so daß ebenfalls keine Zündung des Sicherheitssystems erfolgen kann. Zur Sicherheit ist insbesondere zusätzlich vorgesehen, daß das eine Programm, z.B. P1, die Beendigung des anderen Programms, z.B. P2 prüft und umgekehrt. Dieses erfolgt dadurch, daß jedes Programm P1, P2 eine Schlußkennung aufweist, die von dem entsprechenden anderen Programm P2, P1 überwacht wird. Insofern prüft z.B. das Programm P2, ob das Programm P1 vor dem Zeitpunkt 3T/2 aufgehört hat (vergleiche Figur 2).

## Patentansprüche

1. Insassen-Sicherheitssystem für ein Fahrzeug, insbesondere Rückhaltesystem, wie Airbag, Gurtstraffer oder dergleichen, mit einer mindestens zwei Sensoren (3, 4) aufweisenden Sensoreinrichtung (2), einer mindestens zwei Aufbereitungsschaltungen (8, 9) umfassenden Aufbereitungseinrichtung (7) für die Sensorsignale, einem Rechnersystem (12) und einer aus mindestens zwei Stufen (19, 20) bestehenden Auslöseschaltung (18) für eine Sicherheitseinrichtung, bei dem das als Einrechnersystem (30) ausgebildete Rechnersystem (12) derart ausgebildet ist, daß es die Daten der beiden Aufbereitungsschaltungen (8, 9) in zwei zeitlich zueinander versetzten Programmen (P1, P2) bearbeitet, dadurch gekennzeichnet, daß der jeweilige Start der beiden Programme (P1, P2) durch zwei voneinander unabhängige Interruptquellen er-

<div align="center">4</div>

zeugt wird.

2. Sicherheitssystem nach Anspruch 1, dadurch gekennzeichnet, daß die Startzeit (T1) des ersten Programms (P1) n . T und die Startzeit (T2) des zweiten Programms (P2) (2n + 1) . (T/2) beträgt, wobei n die aufeinanderfolgenden ganzen positiven Zahlen des Zahlenstrahls sind und T eine Bearbeitungsperiode darstellt.

3. Sicherheitssystem nach einem der vorhergehenden Ansprüche, gekennzeichnet durch eine Watchdog-Schaltung, die durch die beiden Programme (P1, P2) getriggert wird und die an einen Reset-Eingang (29) des Rechnersystems (12) angeschlossen ist.

4. Sicherheitssystem nach einem der vorhergehenden Ansprüche, dadurch gekennzeichnet, daß die Watchdog-Schaltung als Fenster-Watchdog-Schaltung (23) ausgebildet ist.

5. Sicherheitssystem nach einem der vorhergehenden Ansprüche, dadurch gekennzeichnet, daß das Triggersignal $U_{WD}(t)$ je zur Hälfte von dem ersten und dem zweiten Programm (P1, P2) erzeugt wird.

6. Sicherheitssystem nach einem der vorhergehenden Ansprüche, dadurch gekennzeichnet, daß der Start des einen, insbesondere zweiten Programms (P2) eine ansteigende Flanke und daß der Start des anderen, insbesondere ersten Programms (P1) eine abfallende Flanke des Triggersignals $U_{WD}(t)$ erzeugt.

7. Sicherheitssystem nach einem der vorhergehenden Ansprüche, dadurch gekennzeichnet, daß das erste Programm (P1) beendet ist, bevor das zweite Programm (P2) startet.

8. Sicherheitssystem nach einem der vorhergehenden Ansprüche, dadurch gekennzeichnet, daß das eine Programm (P1, P2) die Beendigung des anderen Programms (P1, P2) prüft.

9. Sicherheitssystem nach einem der vorhergehenden Ansprüche, dadurch gekennzeichnet, daß jedes Programm (P1, P2) eine Schlußkennung aufweist, die von dem entsprechend anderen Programm (P1, P2) überwacht wird.

10. Sicherheitssystem nach einem der vorhergehenden Ansprüche, dadurch gekennzeichnet, daß eine Auslösung der Auslöseschaltung (18) nur dann erfolgt, wenn ihre beiden Stufen (19, 20) aufgrund eines gleichen oder annähernd gleichen Ergebnis' beider Programmabläufe aktiviert werden.

## Claims

1. Vehicle occupant safety system, in particular a restraining system such as an airbag, safety-belt tightener or the like, with a sensor device (2) having at least two sensors (3, 4), a preprocessing device (7) comprising at least two preprocessing circuits (8, 9), for the sensor signals, a computing system (12) and a trigger circuit (18) consisting of at least two stages (19, 20), for a safety device, in which the computing system (12) constructed as a single-computer system (30) is constructed in such a way that it processes the data of the two preprocessing circuits (8, 9) in two programs (P1, P2) with timing staggered with respect to one another, characterised in that the respective start of the two programs (P1, P2) is generated by two interrupt sources which are independent of one another.

2. Safety system according to Claim 1, characterised in that the starting time (T1) of the first program (P1) is n . T and the starting time (T2) of the second program (P2) is (2n + 1) . (T/2), n being the successive whole positive numbers of the number scale and T constituting a processing period.

3. Safety system according to one of the preceding claims, characterised by a watchdog circuit which is triggered by the two programs (P1, P2) and which is connected to a reset input (29) of the computing system (12).

4. Safety system according to one of the preceding claims, characterised in that the watchdog circuit is constructed as a window watchdog circuit (23).

5. Safety system according to one of the preceding claims, characterised in that the trigger signal $U_{WD}(t)$ is generated in halves by the first and the second program (P1, P2).

6. Safety system according to one of the preceding claims, characterised in that the start of the one program, in particular the second program (P2) generates a rising edge, and in that the start of the other program, in particular the first program (P1) generates a trailing edge of the trigger signal $U_{WD}$ (t).

7. Safety system according to one of the preceding claims, characterised in that the first program (P1) is ended before the second program (P2) starts.

8. Safety system according to one of the preceding claims, characterised in that the one program (P1, P2) tests the termination of the other program (P1, P2).

9. Safety system according to one of the preceding claims, characterised in that each program (P1, P2) has an end identifier which is monitored by the respective other program (P1, P2).

10. Safety system according to one of the preceding claims, characterised in that triggering of the trigger circuit (18) only occurs if its two stages (19, 20) are activated on the basis of an identical or approximately identical result of the execution of the two programs.


**Revendications**

1. Système de protection des passagers d'un véhicule, notamment système de retenue tel que poche d'air, tendeur de ceinture ou analogue, avec une installation de détection (2) comprenant au moins deux capteurs (3, 4), une installation de préparation (7) comprenant au moins deux circuits de préparation (8, 9) pour les signaux de commande, un système de calcul (12) et un circuit de déclenchement (18) formés d'au moins deux échelons (19, 20) pour une installation de sécurité pour laquelle le système de calcul (12) réalisé sous la forme d'un système à calculateur unique (30) est conçu pour traiter les données des deux circuits de préparation (6, 8) dans deux programmes (P1, P2) décalés dans le temps, système caractérisé en ce que le démarrage respectif des deux programmes (P1, P2) est fait par deux sources d'interruption indépendantes.

2. Système de sécurité selon la revendication 1, caractérisé en ce que l'instant de démarrage (T1) du premier programme (P1) est égal à n · T et l'instant de démarrage (T2) du second programme (P2) est égal à (2n + 1) · (T/2), relations dans lesquelles n représente des nombres positifs entiers successifs d'une suite de nombres et T représente la période de travail.

3. Système de sécurité selon l'une des revendications précédentes, caractérisé par un circuit "chien de garde" déclenché par les deux programmes (P1, P2) et reliés à une entrée de remise à l'état initial (29) du système de calcul (12).

4. Système de sécurité selon l'une des revendications précédentes, caractérisé en ce que le circuit "chien de garde" est réalisé sous la forme d'un circuit "chien de garde" à fenêtre (23).

5. Système de sécurité selon l'une des revendications précédentes, caractérisé en ce que le signal de déclenchement $U_{WD}$(t) est généré chaque fois par moitié par le premier et le second programme (P1, P2).

6. Système de sécurité selon l'une des revendications précédentes, caractérisé en ce que le démarrage de l'un des programmes, en particulier le second programme (P2) entraîne la formation d'un flanc montant et le démarrage de l'autre programme, en particulier du premier programme (P1) entraîne la formation d'un flanc descendant du signal de déclenchement $U_{WD}$ (t).

7. Système de sécurité selon l'une des revendications précédentes, caractérisé en ce que le premier programme (P1) est terminé avant que ne démarre le second programme (P2).

8. Système de sécurité selon l'une des revendications précédentes, caractérisé par un programme (P1, P2) qui contrôle la fin de l'autre programme (P1, P2).

9. Système de sécurité selon l'une des revendications précédentes, caractérisé en ce que chaque programme (P1, P2) présente une reconnaissance de fin qui surveille de façon correspondante l'autre programme (P1, P2).

10. Système de sécurité selon l'une des revendications précédentes, caractérisé en ce que le circuit de déclenchement (18) ne se déclenche que si les deux échelons (19, 20) sont activés par un même résultat ou un résultat pratiquement identique de l'exécution des deux programmes.

Fig. 1

EP 0 479 792 B1

Fig. 2